Europäisches Patentamt

European Patent Office

Office européen des brevets

(11) Veröffentlichungsnummer: **0 185 292**

**A1**

## (12) EUROPÄISCHE PATENTANMELDUNG

(21) Anmeldenummer: 85115681.0

(22) Anmeldetag: 10.12.85

(51) Int. Cl.⁴: **A22B 5/20** , A22C 17/00 , B27B 13/00 , B23D 55/00

(30) Priorität: 19.12.84 DE 3446317

(43) Veröffentlichungstag der Anmeldung: 25.06.86 Patentblatt 86/26

(84) Benannte Vertragsstaaten: AT BE DE FR GB IT NL SE

(71) Anmelder: Bizerba-Werke Wilhelm Kraut GmbH & Co. KG.
Wilhelm-Kraut-Strasse 41
D-7460 Balingen 1(DE)

(72) Erfinder: Schweighardt, Peter
Eschensrasse 8
D-7992 Tettnang-Oberhof(DE)
Erfinder: Maurer, Albrecht
Nagolder Strasse 8
D-7460 Balingen 1(DE)
Erfinder: Butz, Alois
Auf dem Kapf 12
D-7465 Geislingen 1(DE)

(74) Vertreter: Hoeger, Stellrecht & Partner
Uhlandstrasse 14c
D-7000 Stuttgart 1(DE)

(54) **Bandsäge, insbesondere für Fleisch und Knochen.**

(57) Eine Bandsäge, insbesondere für Fleisch und Knochen, mit einem über ein Umlenkrad und ein Antriebsrad geführten Sägeband weist einen Auffangbehälter für Sägespäne auf, der einstückig mit einer unteren Abdeckung für das Antriebsrad verbunden ist und nur gemeinsam mit der Abdeckung in das Maschinengestell einsetzbar oder von diesem abnehmbar ist. Der Auffangbehälter umschließt das Antriebsrad und die unter dem Schneidtisch liegenden Teile des Sägebandes praktisch allseitig.

Bandsäge, insbesondere für Fleisch und Knochen

Die Erfindung betrifft eine Bandsäge, insbesondere für Fleisch und Knochen, mit einem Maschinengestell, in dem oben ein Umlenkrad und unten ein Antriebsrad für ein endloses Sägeband drehbar gelagert sind, mit einem Motor für das Antriebsrad, mit oberen und unteren Abdeckungen für das Umlenk- bzw. Antriebsrad, mit einem Schneidtisch zur Auflage von Schneidgut, insbesondere Fleisch oder Knochen, und mit einem unter dem Schneidtisch angeordneten Auffangbehälter für Sägespäne.

Bei bekannten Bandsägen dieser Art sind die oberen und unteren Abdeckungen als schwenkbare oder lösbar befestigte Türen ausgebildet, welche im Schließzustand vor dem Umlenk- bzw. dem Antriebsrad liegen und diese abdecken. Der Auffangbehälter für Sägespäne ist als ein von der unteren Tür getrenntes Bauteil ausgebildet und muß bei offener Tür separat in das Maschinengestell unterhalb des Schneidtisches eingesetzt werden.

Da die Sägespäne oder dergl. Sägeabfälle nicht ausschließlich senkrecht nach unten fallen, sondern durch das umlaufende Sägeband vor allem unterhalb des Schneidtisches auch an die Innenwand der Tür und das Maschinengestell geschleudert werden, hat ein solcher separater Auffangbehälter den Nachteil, daß nur ein Teil der anfallenden Sägespäne in ihn gelangt, während sich der Rest an der Tür und am Maschinengestell festsetzt. Zudem fallen beim Öffnen der Tür daran haftende Sägeabfälle auf den Fußboden. All dies führt dazu, daß die bekannten Auffangbehälter einen hohen Reinigungsaufwand bedingen. Da die bekannten Bandsägen auch ohne eingesetzten Auffangbehälter betrieben werden können, gelangen die Sägespäne in diesem Falle direkt auf die Innenseite der Tür, das Maschinengestell oder den Fußboden, wodurch sich der Reinigungsaufwand noch erhöht.

Es ist Aufgabe der Erfindung, eine gattungsgemäße Bandsäge so zu verbessern, daß alle unterhalb des Schneidtisches anfallenden Sägespäne zwangsläufig aufgefangen werden und eine Verschmutzung der Säge und ihrer Aufstellfläche gegenüber dem Stand der Technik erheblich reduziert wird.

Die Aufgabe wird erfindungsgemäß dadurch gelöst, daß die untere Abdeckung für das Antriebsrad und der Auffangbehälter einstückig miteinander verbunden und nur gemeinsam in das Maschinengestell einsetzbar oder von diesem abnehmbar sind.

Bei bevorzugten Ausführungsformen der Erfindung umschließt der mit der unteren Abdeckung einstückige Auffangbehälter das Antriebsrad und die unter dem Schneidtisch liegenden Teile des Sägebandes, wobei der Auffangbehälter allseitig geschlossen sein kann und vorteilhafterweise lediglich an seiner Oberseite zwei Aussparungen für den Durchtritt des Sägebandes sowie an seiner Rückseite eine mit diesen Aussparungen verbundene Öffnung für den Durchtritt des Antriebsrades aufweist.

Besonders günstig ist es, wenn ein durch das Abnehmen des Auffangbehälters betätigter Schutzschalter vorgesehen ist, der den Arbeitsstromkreis des Motors unterbricht.

Die nachstehende Beschreibung einer bevorzugten Ausführungsform der Erfindung dient im Zusammenhang mit beiliegender Zeichnung der weiteren Erläuterung. Es zeigen:

Fig. 1 eine Vorderansicht einer Bandsäge;

Fig. 2 eine Seitenansicht der Bandsäge aus Fig. 1;

Fig. 3 eine schaubildliche Ansicht einer mit einem Auffangbehälter für Sägespäne kombinierten Abdeckung für ein unteres Antriebsrad der Bandsäge;

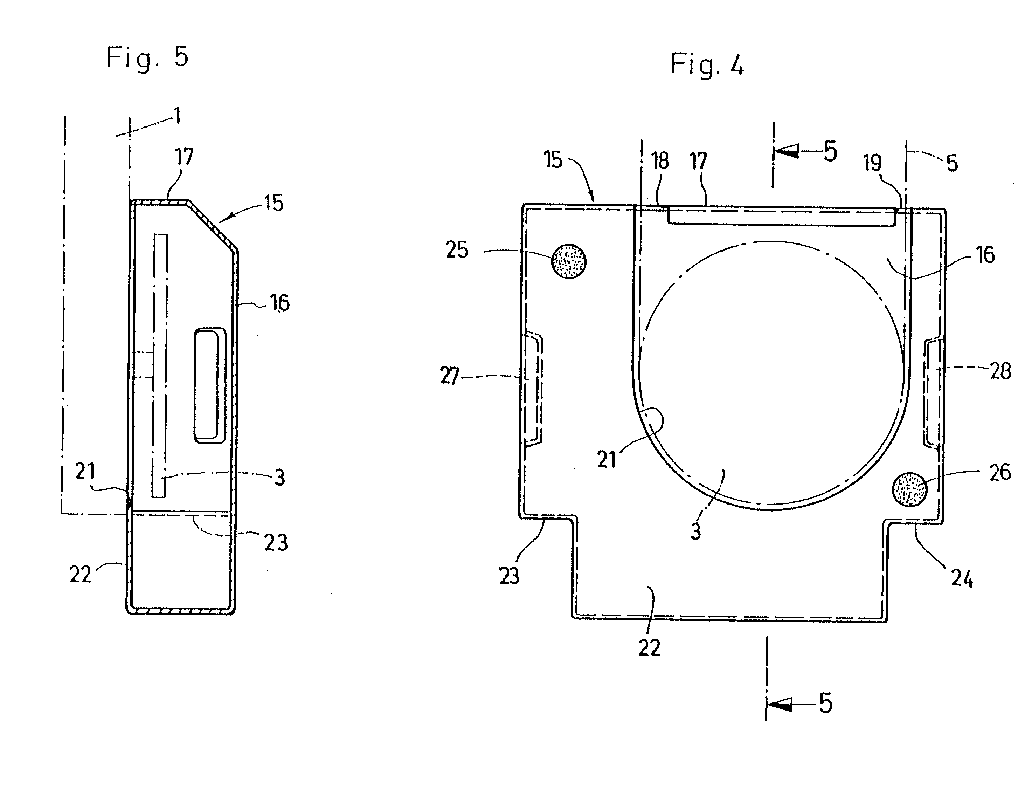

Fig. 4 eine Rückansicht des Auffangbehälters aus Fig. 3 und

Fig. 5 eine Schnittansicht des Auffangbehälters entlang der Linie 5-5 in Fig. 4.

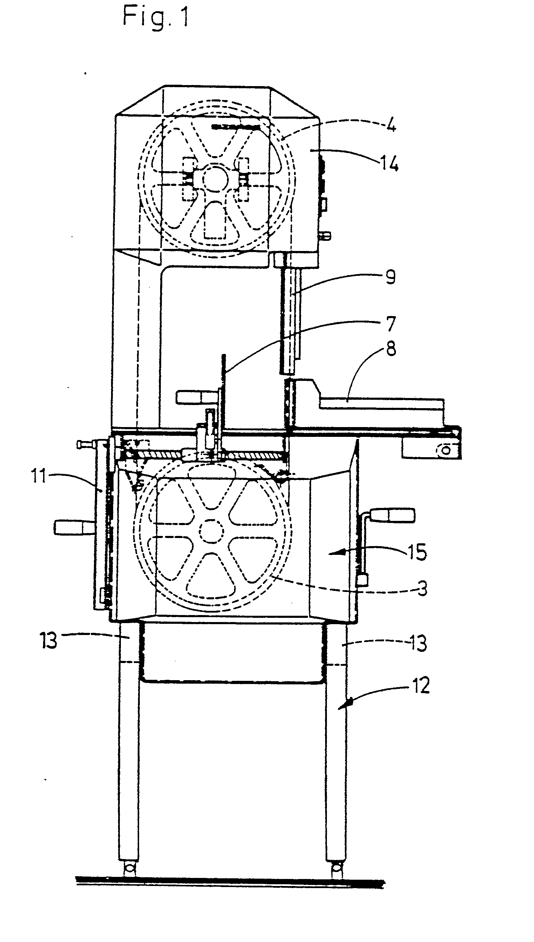

Die auf der Zeichnung dargestellte Bandsäge umfaßt in an sich bekannter Weise ein Maschinengestell 1, in dem ein Motor 2 ein unten im Maschinengestell drehbar gelagertes Antriebsrad 3 antreibt. Über dem Antriebsrad 3 ist im Maschinengestell 1 frei drehbar ein Umlenkrad 4 angeordnet. Über die Räder 3, 4 läuft ein endloses Sägeband 5. Das Maschinengestell 1 trägt einen festen Schneidtisch 6, an dem eine Portioniereinrichtung 7 verschieb- und verschwenkbar gelagert ist. Wahlweise kann der Schneidtisch 6 auch mit einem Schiebetisch bestückt werden, der seitlich verschiebund verschwenkbar gelagert ist. Am Oberteil des Maschinengestell 1 ist eine höhenverstellbare, das Sägeband 5 abdeckende Schutzschiene 9 vorgesehen. Beim Schneiden ohne Schiebetisch 8 wird eine abnehmbare Zuführschiene 11 oberhalb der Schutzschiene 9 schwenkbar gelagert, die, wenn sie nicht gebraucht wird, seitlich an das Maschinengestell 1 angehängt werden kann. Dieser Zustand ist in Figur 1 dargestellt. Das Maschinengestell 1 ist auf einem Fußgestell 12 abgestützt, dessen Füße durch seitliche Holme 13 miteinander verbunden sind.

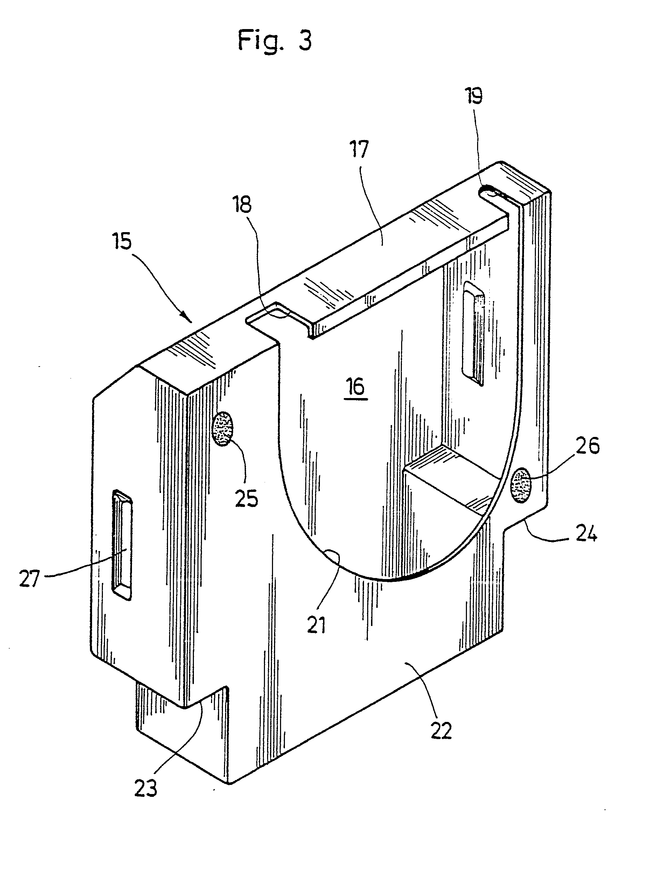

Im Bereich des oben gelegenen Umlenkrades 4 ist als obere Abdeckung am Maschinengestell 1 mittels Gelenkscharnieren schwenkbar eine obere Türe 14 gelagert, die durch Haftmagneten oder einen Schnellspannverschluß in ihrer Schließstellung gehalten ist. Eine im Bereich des unten gelegenen Antriebsrades 3 vorgesehene Abdeckung ist gleichzeitig als allseitig geschlossener Auffangbehälter 15 für Sägespäne ausgebildet. Eine Vorderwand 16 des Auffangbehälters 15 dient als vordere Abdeckung für das Antriebsrad 3. An seiner Oberseite 17 weist der Auffangbehälter 15 (Fig. 3) zwei Aussparungen 18, 19 für den Durchtritt des Sägebandes auf. Diese Aussparungen stehen mit einer großen Öffnung 21 an der Rückseite 22 des Auffangbehälters in Verbindung, die den Durch- und Eintritt des Antriebsrades 3 in den Behälter 15 ermöglicht. Mit zwei seitlichen Schultern 23, 24 ruht der Auffangbehälter 15 auf den seitlichen Holmen 13 des Fußgestelles 12 auf. Haftmagnete 25, 26 dienen der Halterung des Behälters 15 am Maschinengestell. Zur leichten Montage und Demontage des Auffangbehälters 15 sind an seinen Seitenwänden Griffmulden 27, 28 vorgesehen. Die Verbindung des Auffangbehälters 15 mit dem Maschinengestell kann auch mit Hilfe üblicher Schnellspannverschlüsse erfolgen.

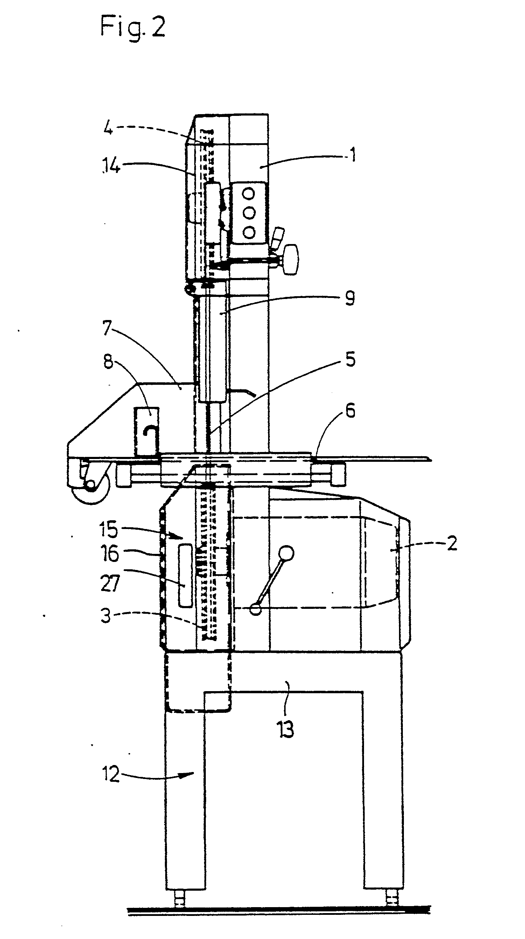

Wie insbesondere aus Fig. 2 hervorgeht, umschließt der mit der Abdeckung für das Antriebsrad 3 einstückige Auffangbehälter 15 dieses Antriebsrad 3 und die unterhalb des Schneidtisches 16 verlaufenden Teile des Sägebandes 5 allseitig, so daß die anfallenden Sägespäne praktisch restlos aufgefangen werden und leicht entfernt werden können. Die große Öffnung 21 an der Rückseite 22 des Auffangbehälters 15 ermöglicht dabei eine leichte Entleerung und Reinigung des Auffangbehälters.

In weiterer Ausgestaltung der Erfindung ist am Maschinengestell ein Schutzschalter vorgesehen, der den Arbeitsstromkreis des Motors 2 unterbricht und für eine rasche Abbremsung des Sägeblatts 5 sorgt, sobald der Auffangbehälter 15 vom Fußgestell 12 abgenommen wird. Derartige Schutzschalter sind an sich bekannt und brauchen daher nicht im einzelnen beschrieben zu werden. Vorzugsweise handelt es sich um kontaklose Näherungsschalter, beispielsweise Rohrmagnetschalter. Ein derartiger Schutzschalter kann auch der oberen Tür 14 zugeordnet werden, so daß sich die Bandsäge ebenfalls abschaltet, sobald diese Tür geöffnet wird. Nach dem Wiedereinsetzen des Auffangbehälters 15 (oder dem Schließen der Tür 14) ist die Bandsäge sofort betriebsbereit.

Die dargestellte und beschriebene Bandsäge eignet sich insbesondere als Fleisch- oder Knochenbandsäge. Sie kann jedoch auch zum Sägen anderer Materialien eingesetzt werden.

**Ansprüche**

1. Bandsäge, insbesondere für Fleisch und Knochen, mit einem Maschinengestell, in dem oben ein Umlenkrad und unten ein Antriebsrad für ein endloses Sägeband drehbar gelagert sind, mit einem Motor für das Antriebsrad, mit oberen und unteren Abdeckungen für das Umlenk- bzw. Antriebsrad, mit einem Schneidtisch zur Auflage von Schneidgut, insbesondere Fleisch oder Knochen, und mit einem unter dem Schneidtisch angeordneten Auffangbehälter für Sägespäne, **dadurch gekennzeichnet**, daß die untere Abdeckung (16) für das Antriebsrad (3) und der Auffangbehälter (15) einstückig miteinander verbunden und nur gemeinsam in das Maschinengestell (1, 12, 13) einsetzbar oder von diesem abnehmbar sind.

2. Bandsäge nach Anspruch 1, dadurch gekennzeichnet, daß der mit der unteren Abdeckung (16) einstückige Auffangbehälter (15) das Antriebsrad (3) und die unter dem Schneidtisch (6) liegenden Teile des Sägebandes (5) umschließt.

3. Bandsäge nach Anspruch 1 oder 2, dadurch gekennzeichnet, daß der Auffangbehälter (15) allseitig geschlossen ist und lediglich an seiner Oberseite (17) zwei Aussparungen (18, 19) für den Durchtritt des Sägebandes (5) sowie an seiner Rückseite (22) eine mit diesen Aussparungen verbundene Öffnung (21) für den Durchtritt des Antriebsrades (3) aufweist.

4. Bandsäge nach Anspruch 1, 2 oder 3, dadurch gekennzeichnet, daß der Auffangbehälter (15) mit seitlichen Schultern (23, 24) auf einem Fußgestell (12, 13) der Bandsäge abgestützt ist.

5. Bandsäge nach einem der Ansprüche 1 bis 4, dadurch gekennzeichnet, daß der Auffangbehälter (15) zwei Griffmulden (27, 28) aufweist.

6. Bandsäge nach einem der voranstehenden Ansprüche, dadurch gekennzeichnet, daß der Auffangbehälter (15) durch Haftmagnete (25, 26) mit dem Maschinengestell (1) verbunden ist.

7. Bandsäge nach einem der voranstehenden Ansprüche, dadurch gekennzeichnet, daß ein durch das Abnehmen des Auffangbehälters (15) betätigter Schutzschalter vorgesehen ist, der den Arbeitsstromkreis des Motors (2) unterbricht.

# Fig. 1

Fig. 2

# Fig. 3

Fig. 5

Fig. 4

0 185 292

# EUROPÄISCHER RECHERCHENBERICHT

| | EINSCHLÄGIGE DOKUMENTE | | EP 85115681.0 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | <u>US - A - 2 725 082</u> (G.F.DURON) <br> * Gesamt * <br> -- | 1,2,3 | A 22 B 5/20 <br> A 22 C 17/00 <br> B 27 B 13/00 <br> B 23 D 55/00 |
| X | <u>FR - A - 1 108 021</u> (M.R-E. RENNE-PONT) <br> * Gesamt * <br> -- | 1,2 | |
| A | <u>GB - A - 1 445 819</u> (MEGGITT ENGI-NEERING LTD.) <br> * Seite 1, Zeilen 54-64; Seite 2, Zeilen 66-88 * <br> -- | 1,7 | |
| A | <u>GB - A - 644 775</u> (THE HOBART MANU-FACTURING CO.) <br> * Seite 3, Zeile 92 - Seite 4, Zeile 116; Fig. 2,5 * <br> -- | 1,2 | |
| A | <u>DE - A1 - 3 336 814</u> (R.KARUBIAN) <br> * Seiten 8-12 * <br> ---- | 1,2 | RECHERCHIERTE SACHGEBIETE (Int. Cl. 4) <br><br> A 22 B 5/00 <br> A 22 C 17/00 <br> B 27 B 13/00 <br> B 23 D 55/00 <br> B 23 D 53/00 <br> B 27 G 3/00 |

Der vorliegende Recherchenbericht wurde für alle Patentansprüche erstellt.

| Recherchenort | Abschlußdatum der Recherche | Prüfer |
|---|---|---|
| WIEN | 13-03-1986 | IRMLER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82